# EUROPÄISCHE PATENTSCHRIFT

(11) **EP 1 810 210 B1**
(45) Veröffentlichungstag und Bekanntmachung des Hinweises auf die Patenterteilung: **09.07.2008**
(21) Anmeldenummer: 05773350.3
(22) Anmeldetag: 24.08.2005
(51) Int. Cl.: G06K 7/00, H04B 1/52, H04B 1/40

(54) **VERFAHREN UND VORRICHTUNG ZUR UNTERDRÜCKUNG EINES SENDESIGNALS IN EINEM EMPFÄNGER EINES RFID SCHREIB-/LESEGERÄTS**
METHOD AND DEVICE FOR SUPPRESSING A TRANSMITTED SIGNAL IN A RECEIVER OF AN RFID WRITE/READ UNIT
PROCEDE ET DISPOSITIF DE SUPPRESSION D'UN SIGNAL D'EMISSION DANS UN RECEPTEUR D'UN APPAREIL D'ECRITURE/LECTURE RFID

(30) Priorität: 08.10.2004 CH 166004
(43) Veröffentlichungstag der Anmeldung: 25.07.2007
(73) Patentinhaber: Elektrobit Wireless Communications Ltd., 90570 Oulu (FI)
(72) Erfinder: KÜNG, Roland, 8633 Wolfhausen (CH)
(74) Vertreter: Rentsch & Partner
(86) Internationale Anmeldenummer: PCT/CH2005/000495
(87) Internationale Veröffentlichungsnummer: WO 2006/037241

(56) Entgegenhaltungen:
- WO-A-00/21204
- WO-A-00/52838
- US-A- 4 594 479
- US-A- 5 691 978
- US-A1- 2001 001 758
- US-A1- 2004 106 381
- US-B1- 6 229 992

## Beschreibung

Die Erfindung fällt in das Gebiet der Kommunikationstechnik. Sie betrifft ein Verfahren und eine. Vorrichtung zum Betrieb eines RFID Schreib-/Lesegeräts mit einer Sendesignalunterdrückung, wobei das RFID Schreib-/Lesegerät einen Hochfrequenzteil mit einem Sender und einem Empfänger umfasst und einen auf digitaler Signalverarbeitung basierenden Basisbandteil.

### Stand der Technik

RFID Systeme bestehen aus einem RFID Schreib-/Lesegerät (Reader) und elektronischen Etiketten (Tag). Letztere können passiv, d.h. ohne Batterie arbeiten und sind damit auf dauernde Anwesenheit eines vom RFID Schreib-/Lesegerät ausgesendeten Trägersignals angewiesen, auch Energieträger genannt. Das Trägersignal dient der Etikette zugleich als Hochfrequenzoszillator. Semi-passive Etiketten besitzen zwar eine Batterie, brauchen jedoch ebenfalls ein dauernd ausgesendetes Trägersignal anstelle eines Hochfrequenzoszillators zur Modulation. RFID Systeme mit Reichweiten von mehreren Metern benutzen dabei UHF-Frequenzen oder Mikrowellenfrequenzen. Das RFID Schreib-/Lesegerät selbst besteht aus einem Basisbandteil und einem Hochfrequenzteil (HF-Teil) mit einem Sender sowie einem Empfänger.

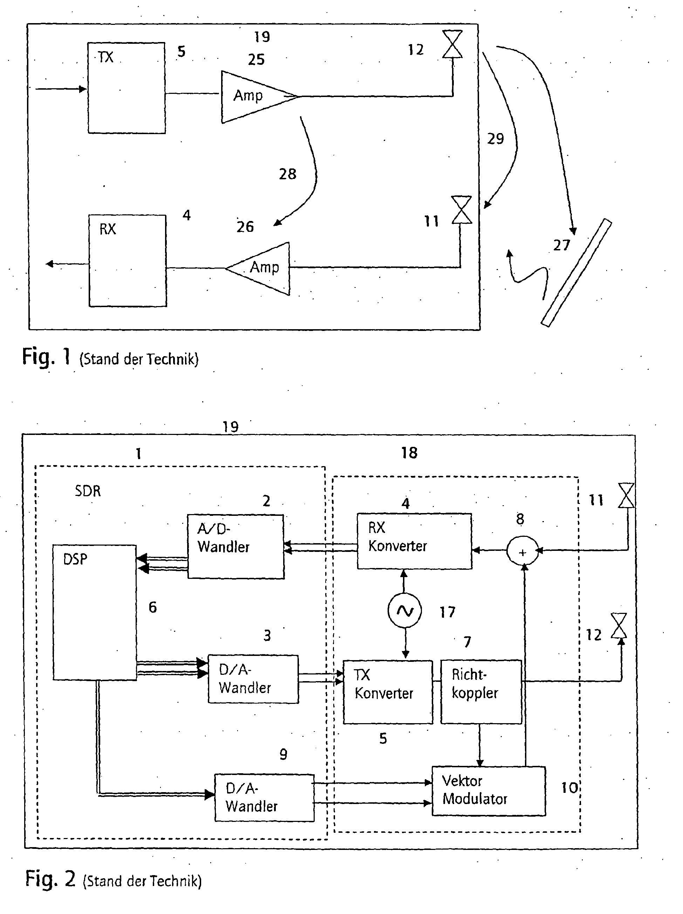

Zur Erreichung von Lesedistanzen im Bereich einiger Meter bei passiven und einigen 10 Metern bei semi-passiven elektronischen Etiketten muss ein von einem Sender (TX) bereit gestelltes Sendesignal mit einer Leistung von etwa 1 Watt (30 dBm) erzeugt und abgestrahlt werden. Ein wesentlicher Teil dieses vergleichsweise leistungsstarken Sendesignals koppelt dabei in störender Weise direkt in den Empfänger (RX) ein, siehe Fig. 1, die Kopplungspfade 28, 29 und die Reflektion an einem Reflektor 27. Andrerseits müssen die Empfänger in den RFID Schreib-/Lesegeräten die geringen Pegel des Antwortsignals detektieren, welches von den Etiketten lediglich nach einer Modulation des Trägersignals mit Antwortdaten unverstärkt reflektiert wird. Eine solche resultierende, .erforderliche hohe Dynamik im Empfänger des RFID Schreib-/Lesegeräts stellt eine enorme Anforderung für jedes bidirektional arbeitende System dar. Dabei kann das RFID Schreib-/Lesegerät entweder mit einer einzigen Antenne betrieben werden, wobei Sender und Empfänger durch einem Zirkulator entkoppelt werden, oder es werden zwei direkt benachbarte Antennen verwendet. In beiden Fällen ist die Isolation zwischen Sender und Empfänger bekanntermassen gering; typischerweise beträgt eine solche Isolation lediglich rund 20 dB.

Das direkt vom Sender in den Empfänger eingekoppelte Sendesignal ist somit nicht nur sehr leistungsstark, sondern auch unerwünscht, da es in den Hochfrequenzstufen des Empfängers zu Intermodulation mit dem Antwortsignal einer elektronischen Etikette führt und damit die Empfindlichkeit des Empfängers reduziert. Anders formuliert ist die Isolation vom Sender (TX) zum Empfänger (RX) für ein RFID Schreib-/Lesegerät für grosse Reichweiten in der Praxis im UHF- und Mikrowellenbereich viel zu gering. Die Isolation wird bestimmt durch den Aufbau des RFID Schreib-/Lesegeräts und insbesondere durch die Technologie des Zirkulators am Antennenausgang bzw. durch die Anordnung der verwendeten Sende- und Empfangsantennen. Die Verwendung eines Zirkulator kann im Folgenden gleich behandelt werden wie die Verwendung getrennter Antennen. Letztere wird hier stellvertretend für beide Verwendungen erörtert.

Ein Zahlenbeispiel zeigt die oben erläuterte Problematik wie folgt auf: Beträgt die Sendeleistung 30 dBm bei einer Isolation von 20 dB, so ergibt sich daraus ein Störsignal von +10 dBm am Empfängereingang. Das von einer passiven elektronischen Etikette ausgesandte Nutzsignal beträgt im UHF-Bereich bei einer Distanz von ca. 4 m jedoch nur gerade -70 dBm. Der hohe Pegel des direkt im Empfänger eingekoppelten Sendesignals von +10 dBm überfordert somit den Eingangsverstärker eines jeden RFID Schreib-/Lesegeräts, der typischerweise ein rauscharmer Kleinsignalverstärker ist.

Es entstehen Intermodulationsfrequenzen zwischen dem eingekoppelten Sendesignal und dem Empfangssignal elektronischer Etiketten oder den Signalen anderer gleichzeitig aktiver RFID Schreib-/Lesegeräte. Wird das Empfangssignal zur weiteren Auswertung digitalisiert, entsteht also mit einer Dynamik von 80 dB zusätzlich ein Problem mit der zur Verfügung stehenden Auflösung bei den hierfür üblichen 14 bis 16 Bit Analog/Digital Wandlern. Wenn man das Problem durch Verbesserung der Komponenten allein lösen möchte, werden die Anforderungen an die HF-Komponenten und den A/D-Wandler sehr hoch und uninteressant, insbesondere was die Linearität und Stromaufnahme betrifft. Eine Unterdrückung beziehungsweise eine elektronische Kompensation des eingekoppelten Sendesignals ist zur Erzielung grosser Reichweiten somit notwendig.

Eine bekannte Empfangsarchitektur sieht deshalb eine so genannte Direct Conversion Stufe (DCS) vor, um von der Hochfrequenz (HF) in ein Basisband zu gelangen. Werden die Daten auf der elektronischen Etikette gleichstromfrei moduliert und reflektiert, so lässt sich durch wegfiltern des Gleichspannungsanteils (DC) nach dem Heruntermischen in der DCS des Empfängers die Dynamik für den A/D-Wandler entschärfen. Im HF Eingangsteil eines Empfängers ändert sich jedoch nichts an der Intermodulations-Situation und es ist nach wie vor eine elektronische Kompensation notwendig. Da durch die Entfernung des Gleichspannungsanteils der Beitrag des eingekoppelten Sendesignals im Basisband eliminiert wird, muss er in einer zusätzlichen Schaltung erfasst und verarbeitet werden. In der Praxis wäre ein maximales Empfangssignal mit einem Pegel von beispielsweise -10 dBm wünschenswert. Gemäss oben stehender Berechnung ist somit zusätzlich eine Isolation von mindestens 20 dB notwendig.

In der US 2004/0106381 und der US 6229992 B1 wird vorgeschlagen, das eingekoppelte Signal im Empfänger, umfassend eine Empfangsantenne 11, eine Additionsstufe 8, einen RX Konverter 4 und einen A/D Wandler 2 in Fig. 2, zu messen, und ein Kompensationssignal, welches direkt vom Sendesignal im HF-Teil abgeleitet ist, im aufgezeigten Empfangspfad zu addieren.

Ein Lesegerät 19 besteht bekanntermassen aus einem Software definierten Basisband Teil 1 (SDR) und einem HF-Teil 18, wie in Fig. 2 dargelegt. In solchen SDR basierten Sende-/Empfangsanlagen werden die komplexwertigen Signale soweit rein rechnerisch in einem Signalprozessor 6 aufbereitet bzw. verarbeitet, dass sie nur noch mittels linearen Konvertern (Up-Converter bzw. Down-Converter) ins, beziehungsweise vom Hochfrequenzband (HF-Band) verschoben werden müssen. Ein TX Konverter 5 im Sender wird mit einem komplexen Basisbandsignal (Inphase- und Quadratur- Signal) gespeist, welches vom Signalprozessor 6 über einen zweifachen Digital/Analog (D/A) -Wandler 3 ausgegeben wird. Das Ausgangssignal wird über einen Richtkoppler 7 an eine Sendeantenne 12 weitergeleitet. Von einer Empfangsantenne 11 werden die Empfangssignale über einen RX Konverter 4 in ein komplexes Basisbandsignal (Inphase- und Quadratur- Signal) überführt und an einen zweifachen A/D-Wandler 2 weitergeleitet und vom Signalprozessor 6 übernommen. In der klassischen Lösung wird das Sendesignal aus dem ausgekoppelten HF-Signal des Richtkopplers 7 bezogen und im Vektormodulator 10 mit den Korrekturwerten für Phase und Amplitude vom DSP 6 mit Hilfe eines langsamen D/A-Wandler 9 gewichtet und in einer Additonsstufe 8 dem Empfangsignal zwecks Kompensation zugeführt.

Im einem ersten Schritt des Lesevorgangs wird üblicherweise in einer kurzen Listen-Before-Talk Phase (LBT-Phase) eines Abfragezyklus bei ausgeschaltetem Sender eines ersten RFID Schreib-/Lesegeräts über ein Zeitintervall T0 das Empfangsignal digitalisiert und analysiert. In diesem Signal sind die Abfragesignale weiterer RFID Schreib-/Lesegeräte enthalten, und es lässt sich entscheiden ob der Sender des ersten RFID Schreib-/Lesegeräts eingeschaltet werden darf oder nicht. Wird das erste RFID Schreib-/Lesegerät nach der LBT Phase auf Sendung gebracht, so muss der eigene Empfänger als erstes das eingekoppelte TX Signal kompensieren, um eine hohe Empfindlichkeit zu erreichen.

Das Kompensationssignal wird mittels einer Justierung von Verstärkung und Phase (Gain/Phase Adjuster) aus dem Sendesignal gewonnen. Diese Technik ist als adaptive Filterung bekannt. Die Justierung der Amplitude und Phase geschieht hierbei über den so genannten Vektormodulator 10 vollständig im HF-Bereich. Die Komponenten zur Auskopplung des Sendesignals, zur Addition im Empfangspfad, sowie der Vektormodulator 10 sind aber HF Komponenten, welche selber Ungenauigkeiten und Nichtidealitäten aufweisen. Eine sofort wirksame (instantane) Reduktion der Kopplung erscheint somit nur schwer möglich und in der Praxis nur iterativ in Zyklen: Messen/Kompensieren/Messen etc. realisierbar.

In der US 6229992 wird vorgeschlagen, explizit einen digitalen Signalprozessor (DSP) zur Kontrolle der Unterdrückung zu verwenden, um diese Zyklen zu kontrollieren. Vor jedem Lesevorgang wird eine Kalibrierungsphase benötigt. Wird Frequency Hopping (FH) nach den gängigen Funkvorschriften verwendet, so muss die Kalibrierung für eine Anzahl Frequenzen laufend durchgeführt werden. Die Kalibrierung muss zusätzlich in Einklang mit dem nach neueren Funkvorschriften anzuwendenden Listen-Before-Talk (LBT) Prozesse durchgeführt werden. Bei der Anwendung dieser bekannten Verfahren entsteht auf jeden Fall eine zusätzliche Belastung des Kanals und es geht wertvolle Transaktionszeit mit elektronischen Etiketten verloren. In der US 5691978 wird eine Kombination von Antennenisolation, analoger HF- Unterdrückung und digitalem Echo Canceller im Basisband vorgeschlagen, um eine hohe Isolation zu erreichen. Der Aufwand dazu ist beträchtlich und wirtschaftlich für ein RFID Schreib-/Lesegerät nicht sinnvoll.

In der WO 00/52838 A wird ein Verfahren zum Betrieb eines RFID Schreib-/Lesegeräts mit einer Sendesignalunterdrückung offenbart, wobei das RFID Schreib-/Lesegerät einen Hochfrequenzteil mit einem Sender und einem Empfänger umfasst und einen auf digitaler Signalverarbeitung basierenden Basisbandteil.

All diesen bekannten Verfahren ist gemeinsam, dass bei Anwendung eines auf DCS Basis aufgebauten Empfängers ein Gleichspannungssignal (DC-Signal) auszuwerten sein wird, um die Information über Amplitude und Phase des ein koppelnden Sendesignals zu erhalten. Dieses DC-Signal ist aber wiederum selber durch Kopplungseffekte an den HF-Mischern im RX Konverter mit Fehlern behaftet Dasselbe gilt für Methoden, welche die Detektion des Übersprechens mit einem klassischen Enveloppendetektor bewerkstelligen. Zusätzliche Probleme entstehen, wenn noch andere RFID Schreib-/Lesegeräte unbeabsichtigt gleichzeitig im selben Frequenzkanal senden, da ihre Sendefrequenzen möglicherweise nur geringfügig abweichen und so jeden Messwert verfälschen. Bei Anwesenheit eines Sendesignals eines weiteren störenden RFID Schreib-Lesegeräts, kann somit eine Kalibrierung unter Umständen gar nicht durchgeführt werden. Dieses Problem wird entweder durch die Vorschrift zur Nutzung von LBT gelöst oder durch Synchronisation des ganzes RFID Schreib/Lesegeräte Netzwerkes.

### Darstellung der Erfindung

Es ist deshalb Aufgabe der vorliegenden Erfindung ein Verfahren und eine Vorrichtung zum Betrieb eines RFID Schreib-/Lesegeräts mit einer Sendesignalunterdrückung dahingehend weiterzuentwickeln, dass empfangene Signalanteile, die den Nutzbetrieb des RFID Schreib-/Lesegeräts stören, auf einfache Weise weitgehend unterdrückt werden können.

Die Lösung der der Erfindung zugrunde liegenden Aufgabe ist für das Verfahren in Anspruchs 1 angegeben. Diesen Erfindungsgedanken weiterbildende Merkmale sind Gegenstand der Unteransprüche 2 bis 9.

Erfindungsgemäss erzeugt ein Basisbandteil eines RFID Schreib-/Lesegeräts als ein Kompensationssignal eine in Amplitude und Phase gewichtete Kopie eines Sendesignals, welches Kompensationssignal nach einer linearen Modulation an einem Eingang eines Empfängers in einer Additionsstufe von einem störenden Kopplungssignal zwischen dem Sender und dem Empfänger subtrahiert wird. Dabei ist von Bedeutung, dass dem Sendesignal (und damit auch dem Kompensationssignal, welches ja eine gewichtete Kopie darstellt) ein Hilfssignal mit einem Frequenzoffset fd zu einem Trägersignal des RFID Schreib-/Lesegeräts aufgeprägt wird, zwecks einer gleichspannungsfreien Verarbeitung im Empfänger nach einem RX Konverter. Besonders vorteilhaft ist dabei, dass lediglich lineare Bauteile für das Verfahren notwendig sind, um eine verbesserte Dämpfung eingekoppelter Sendesignale im Empfänger bereitzustellen. Diese verbesserte Dämpfung erlaubt nun erstmalig, den gesamten Empfangsteil auf eine massgeblich verkleinerte Dynamik des zu erwartenden Einganssignals auszulegen. Demzufolge ist mit einer solchen Dynamikanpassung, eine erhöhte Empfindlichkeit gegenüber Antwortsignalen von elektronischen Etiketten erreichbar. Ein sicheres Erkennen und Verarbeiten solcher Antwortsignale geht damit vorteilhaft einher.

Die erfindungsgemäss verwendete digitale Erzeugung des Kompensationssignals im Basisbandteil des RFID Schreib-/Lesegeräts ist darüber hinaus in seiner Funktion massgeblich weniger fehlerbehaftet, als die im Stand der Technik verwendeten, im Hochfrequenz-Bereich arbeitenden Bauteile. Des Weiteren stellt das erfindungsgemässe Verfahren mit einem Hilfssignal eine quasi unmittelbare Kompensation eingekoppelter Sendesignalanteile bereit, im Gegensatz zu den bekannten Verfahren. Dazu kann in einem ersten Schritt das Kompensationssignal ausgeschaltet werden, um die Amplitude und Phase des eingekoppelten Signals zu messen und im Signalprozessor zur Berechnung der Kompensationsgrössen bereitzustellen. Nach dem Einschalten des Kompensationssignals wird die Unterdrückung sofort wirksam und kann durch regelungstechnische Verfahren weiter erhöht werden.

Ferner werden mit dem erfinderischen Verfahren äussere Reflektionen oder geräteinternes Übersprechen zwischen Baugruppen des Sende- und des Empfangspfades unmittelbar kompensierbar. Eine Ausgestaltung des erfindungsgemässen Verfahrens sieht vor, dass ein eingeschaltetes Dämpfungsglied im Eingang des Empfängers zunächst ein Übersteuern und damit Intermodulationen in demselben verhindert, um eine erste Gewichtung für die Kopie des Sendesignals bereitzustellen. Anschliessend wird das Dämpfungsglied ausgeschaltet, und das erfindungsgemässe Verfahren sorgt permanent für eine entsprechende Gewichtung der Kopie des Sendesignals.

Mit Vorteil wird das Trägersignal mit einem kleinen Hub in der Amplitude moduliert oder mit einem Seitenbandsignal verknüpft, zwecks Ermittlung der Gewichte zur Signalunterdrückung.

Eine weitere Ausgestaltung der Erfindung sieht vor, das Trägersignal kurzzeitig in der Frequenz zu verschieben, um die Gewichte zwecks Unterdrückung des Trägersignals bei exakt der im RFID Schreib/Lesebetrieb benutzen Trägerfrequenz bestimmen zu können.

Von besonderem Vorteil ist, das mittels des erfindungsgemässen Verfahrens keinerlei Einfluss auf den regulären Betrieb zu elektronischen Etiketten genommen wird, da diese Etiketten das Hilfssignal als zu schwaches Signal wahrnehmen, um eine Beeinträchtigung zu erfahren

Eine weitere Ausgestaltung der Erfindung sieht vor, dass das Hilfssignal zusätzlich mit einer Pseudo-Zufalls-Sequenz dergestalt moduliert wird, dass das Hilfssignal von Etiketten und anderen RFID Schreib-/Lesegeräte nur als schwaches Rauschsignal wahrgenommen wird, und nur das erzeugende RFID Schreib-/Lesegerät diese Modulation in seinem Empfänger rückgängig machen kann.

Sämtliche weiteren, vorteilhaften Ausgestaltungen des erfindungsgemässen Verfahrens werden nachfolgend beschrieben.

Die Lösung der der Erfindung zugrunden Aufgabe wird für die Vorrichtung mit den Merkmalen des Anspruchs 10 gelöst Die den Erfindungsgedanken weiterbildenden Merkmale sind Gegenstand der Unteransprüche 11 und 12.

Kern der erfindungsgemässen Vorrichtung ist, dass mit dem Basisbandteil neben dem Trägersignal auch ein Hilfssignal und ein Kompensationssignal realisierbar ist, während der HF-Teil lediglich aus bekannten in herkömmlichen RFID Schreib-/Lesegeräten verwendeten Bauelementen besteht. Eine Ausgestaltung der erfinderischen Vorrichtung sieht vor, dass eine Anzahl von Kopplungspfaden durch mindestens eine Erweiterungsstufe zur Erzeugung von gewichteten Kopien des Sendesignals im Basisbandteil kompensierbar ist.

### Kurze Beschreibung der Zeichnung

Im Folgenden wird die Erfindung anhand von Figuren beispielhaft erläutert. Gleiche Gegenstände sind in den Figuren grundsätzlich mit gleichen Bezugszeichen bezeichnet Es zeigen rein schematisch die
- Fig.1: eine bekannte RFID Schreib-/Lesegeräte-Architektur mit einigen nahe liegenden Kopplungspfaden;
- Fig. 2: eine bisher angewendete Vorrichtung zur Kompensation eines Kopplungssignals von einer Senderantenne zu einer Empfängerantenne;
- Fig. 3: eine erfindungsgemässe Vorrichtung zur Kompensation von Kopplungssignalen, und
- Fig. 4: ein Spektrum mit einem Sendesignal des Lesegeräts, einem Antwortsignal elektronischer Etiketten und einem erfindungsgemässen, beispielhaften Hilfssignal.

### Wege zur Ausführung der Erfindung

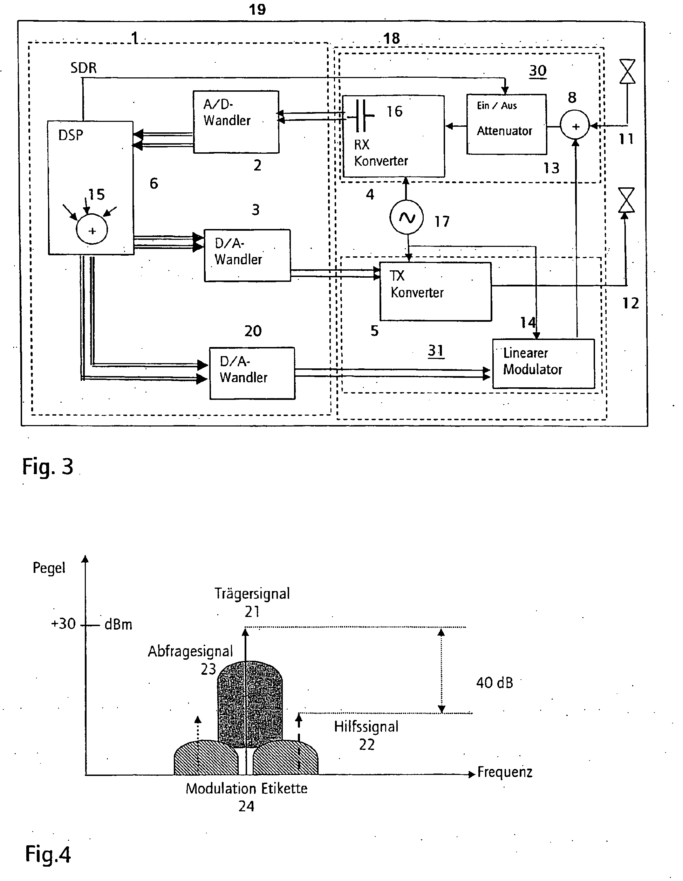

Die vorliegende Erfindung beschreibt nun ein neuartiges Verfahren und eine dazu notwendige Vorrichtung für ein RFID Schreib-/Lesegerät, um eine Kompensation eines von einem Sender in einen Empfänger eingekoppelten Sendesignals vorteilhaft auszugestalten. Fig. 3 zeigt eine gegenüber herkömmlichen Anordnung modifizierte SDR Architektur, die ebenfalls auf dem DCS Prinzip basiert mit einem TX Konverter 4 und einem RX Konverter 5, wie oben beschrieben. Zur Frequenzkonversion wird ein Festfrequenz Oszillator 17 verwendet. Zur Anwahl verschiedener Frequenzkanäle oder zum Verfahren mit Frequency Hopping wird das im Signalprozessor 6 generierte Sendesignal durch digitale Synthese präzise und direkt erzeugt. Insbesondere ist es nicht notwendig, dazu im HF- Teil 18 Baugruppen umzuschalten. Während der Sender mit dem TX Konverter 5 aktiviert ist und Leistung abgibt, wird im Empfänger nach dem RX Konverter 4 über ein Zeitintervall T1 das Empfangsignal, digitalisiert und analysiert, um ein möglichst sofort (instantan) wirksames Kompensationssignal berechnen zu können. Dabei wird Amplitude und Phase des empfangenen Signals relativ zum ausgesendeten Trägersignal berechnet. Die Erzeugung des Kompensationssignals wird im digitalen Basisbandbereich des Sendepfades, innerhalb des Signalprozessors 6 durchgeführt. Es wird im wesentlichen eine in Amplitude und Phase bearbeitete Kopie des Sendesignals generiert, derart dass bei der Addition in einer Additionsstufe 8 das eingekoppelte Signal gerade ausgelöscht wird. Das Kompensationssignal kann auch für mehrere Störsignale im Falle von komplexeren Kopplungssituationen (siehe auch Kopplungspfade 28 und 29 in Fig. 1) durch eine Mehrfach-Implementation 15 erweitert werden, da neben der Kopplung über die Antennen 12 des Senders 31 und 11 des Empfängers 30 auch zwischen dem Sendeverstärker 26 und dem Empfangsverstärker 25 ein störendes Signal entstehen kann (vgl. Fig. 1). Das Kompensationssignal wird wie das Trägersignal 21 digital rechnerisch erzeugt (Direct Digital Synthesis) und über den separaten, schnellen D/A -Wandler 20 (Fig. 8), ausgegeben und in einem linearen Modulator 14 auf die Sende- bzw. Empfangsfrequenz (identisch bei DCS Empfängern) verschoben. Anschliessend wird dieses Signal zum Empfangsignal in der Additionsstufe 8 addiert.

Eine besondere Ausführung der Erfindung ermöglicht den DC-freien Betrieb des Empfängers ohne zusätzliche Messvorrichtungen. Dies wird erreicht, indem dem zum Lesen elektronischer Etiketten verwendeten Trägersignal 21, Fig. 4, ein schwaches Hilfssignal 22 aufmoduliert oder zuaddiert wird. Das Hilfssignal 22 wird spektral und im Pegel so ausgelegt, dass es den Nutzbetrieb in elektronischen Etiketten nicht stört, wie beispielhaft in Fig. 4 graphisch dargestellt. Dieses Hilfssignal kann z.B. in einer einfachen Ausführung ein sinusförmiges Signal der Frequenz fd an der Bandgrenze sein, welches das Trägersignal 21 nur schwach in der Amplitude moduliert. Das Hilfssignal 22 ist aber doch deutlich stärker gewählt als die Antwortsignale 24, welche von elektronischen Etikette reflektiert werden, derart dass der Empfänger nicht an der Empfindlichkeitsgrenze arbeiten muss, um das Kompensationssignal zu bestimmen.

Als beispielhafte Ausführung kann der Pegelplan von Fig. 4 betrachtet werden, bei dem das Hilfssignal 22 40 dB schwächer ist als das Trägersignal 21. Das Kompensationssignal ist wiederum eine in Amplitude und Phasenlage bearbeitete Kopie des mit dem Hilfssignal 22 versehenen Trägersignals 21.

Erfindungsgemäss wird zu Beginn der Trägerkompensation ein festes Dämpfungsglied 13 (z:B: 20 dB Dämpfung) am Empfangseingang zugeschaltet, um die HF- Empfangsverstärker im RX Konverter 4 sicher vor Übersteuerung zu schützen. Der am Empfängereingang 11 eingekoppelte Anteil des Trägersignals 21 weist damit zu Beginn etwa einen Pegel von -10dBm auf. Der Pegel des Hilfssignals 22, bzw. der Modulationsgrad wird praktisch so bemessen, dass man dieses Hilfssignal 22 auch nach dem zugeschalteten Dämpfungsglied 13 in seinem spektralen Bereich noch genau messen kann. Das Hilfssignal 22 erscheint im Empfänger 30 nach der Direkt Conversion Stufe (DCS) im RX Konverter 4 als Wechselsignal der Frequenz fd und nicht als Gleichspannung. Dies hat den Vorteil; dass man den Ausgang des DCS -Ausgang des RX Konverters 4, wunschgemäss wechselspannungsgekoppelt (AC) betreiben kann. Damit kann man auftretende DC-Offsets der Mischerstufen im RX Konverter 4 und natürlich den die Dynamik begrenzenden Anteil des Trägersignals 21 selbst, einfach mit einem Hochpass-Filter 16 entfernen. Dies ist unproblematisch aus Sicht des Nutzsignals, dem Modulationssignal 24 für elektronische Etiketten, da diese normalerweise DC-frei codiert ist.

Alternativ lässt sich ein DC-Anteil auch mittels einer DC-Kompensation im Basisband auf den vom Nutzsignal herrührenden Teil in bekannter Weise korrigieren. Die Auswertung des Hilfsträgers 22 mittels DSP 6 ist flexibel und präzise möglich. Der für die Erzeugung des Kompensationssignals benötigte lineare Modulator 14 lässt sich einfach diskret oder als integrierte Schaltung mit einer ausreichenden Genauigkeit herstellen, um eine sofort wirksame Dämpfung von 20 dB und mehr zu erreichen. Der Rauschsignalbeitrag des linearen Modulators 14 ist zudem nicht grösser als bei der konventionellen Methode mit einem Vektormodulator. Der Rauschpegel beträgt in beiden Ausführungen beispielhaft um -156 dBm/Hz, womit sich eine typische Empfindlichkeit von -80 dBm ergibt.

Damit lässt sich mit der beschriebenen Ausführung eine instantane lsolationsverbesserung erreichen, noch bevor die ersten abgefragten elektronische Etiketten ihr schwaches Antwortsignal reflektieren. Nach dieser instantanen Kompensation kann das zugeschaltete Dämpfungsglied 13 am Empfängereingang ausgeschaltet werden, um nun die volle Empfangsempfindlichkeit zu erhalten, jedoch ohne dass der Empfangsverstärker übersteuert wird. Das eingekoppelte, nun instantan wirksam kompensierte Trägersignal 21 bleibt beispielsweise weiterhin auf einem unschädlichen Pegel unterhalb -10 dBm reduziert.

Da sich elektronische Etiketten oder RFID Schreib-/Lesegeräte bei einer Abfrage bewegen können, ist das eingekoppelte Störsignal vom Trägersignal 21 zeitlich variabel. Eine laufende Messung und Nachführung der Störunterdrückung ist während des Betriebs notwendig und mit Hilfe des Hilfsträgers 22 einfach möglich. Weil nach der instantanen Erstkompensation der Empfänger im korrekten Signalbereich arbeiten kann, mit deutlich weniger Intermodulation als im unkorrigierten Fall, ist dieser Regelkreis nun besser zu bewerkstelligen. Natürlich kann auch in einer Ausführungsvariante zuerst mit eingeschaltetem Dämpfungsglied 13 ein noch besseres Resultat erzeugt werden, bevor man dieses Dämpfungsglied 13 ausschaltet.

Das Hilfssignal 22 kann in verschiedenen Ausführungsvarianten geeignet durch Addition als Einseitenbandsignal zum Trägersignal 21 hinzugefügt werden, oder als Zweiseitenbandsignal durch Amplitudenmodulation des Trägersignals 21 erzeugt werden, oder durch weitere Modulationsformen ausgeprägt sein. Die Erzeugung des Hilfssignals 22 ist jederzeit in Amplitude und Phase exakt, weil dies rein rechnerisch im Signalprozessor 6 generiert wird. Die SDR Architektur 1 erlaubt es nahezu jede Signalform zu erzeugen, welche auch jederzeit durch Laden einer neuen Software an andere Verhältnisse, Parameter oder Systemerfordernisse angepasst werden kann. Es werden keine speziellen oder kritischen HF-Komponenten im HF-Teil 18 benötigt. Die Vorrichtung ist damit leicht an verschiedene heutige und zukünftige Standards im RFID Bereich anpassbar, z.B. ISO-18000 Standards oder Electronic Product Code (EPC) Klassen.

Eine weitere Variante der Erfindung besteht darin, dem Hilfsträgers 22 eine Pseudo-Noise (PN)-Sequenz aufzumodulieren. Der Hilfsträger 22 wird dadurch spektral gespreizt und rauschförmig unter die Pegel der Nutzspektren der Modulation Etikette 23 und des Abfragesignals 24 verteilt. Damit wird der allenfalls störende Effekt des Hilfssignals 22 bei elektronischen Etiketten oder anderen RFID Schreib-/Lesegeräten reduziert. Da dem RFID Schreib-/Lesegerät die Pseudo-Noise-Sequenz bekannt ist, kann es die eigene Spreizung rückgängig machen. Des Weiteren können bei geeigneter Wahl der Parameter der PN-Sequenz die eingekoppelten Signale, welche von einer Mehrwegausbreitung herrühren, also von der Signalausbreitung zwischen RFID Schreib-/Lesegerät und elektronischer Etikette (Kopplungspfade via einem Reflektor 27, Fig. 1), identifiziert und somit auch besser kompensiert werden. Dies kann im Besonderen in Umgebungen mit metallischen Reflektoren 27, wie etwa Werkhallen, vorteilhaft sein. Das Empfangssignal wird im Empfänger Basisbandteil 1 in bekannter Art durch Korrelation mit der Pseudo-Noise-Sequenz in die Bestandteile der Mehrwegausbreitung zerlegt.

Für Systeme welche Frequency Hopping (FH) einsetzen, können die ermittelten Gewichte zur Erzeugung des Kompensationssignals für jede Frequenz, welche angesprungen wird im Signalprozessor 6 abgespeichert werden. Beim nächsten Besuch derselben Frequenz kann der eingespeicherte Wert als guter Startwert für die neuerliche Kompensation benutzt werden.

Für Applikationen, welche eine stark frequenzabhängige Kompensation des eingekoppelten Signals bedingen, z.B. breitbandige Verfahren, kann mithilfe der SDR Architektur das Trägersignal 21 durch einfache Umprogrammierung um eine Frequenz fd verschoben erzeugt werden, derart, dass das Hilfssignal 22 auf die Frequenz der später benutzten Trägerfrequenz 21 zu liegen kommt Dadurch wird die Kopplung exakter gemessen und eine höhere Unterdrückung erzielt.

Eine andere Ausführungsform ermöglicht gar einen Frequenz-Sweep, wie dies von Netzwerk Analysatoren bekannt ist, mit dem Ziel aus mehreren äquidistanten Frequenzabständen Delta_f einen Frequenzgang mit Amplitude und Phase zu bestimmen. Die Kompensation erfolgt danach in dem Signalprozessor 6 durch Gewichtung mit dem Reziproken des Frequenzganges.

## Patentansprüche

1. Verfahren zum Betrieb eines RFID Schreib-/Lesegeräts (19) mit einer Sendesignalunterdrückung, wobei das RFID Schreib-/Lesegerät (19) einen Hochfrequenzteil (HF-Teil) (18) mit einem Sender (31) und einem Empfänger (30) umfasst und einen auf digitaler Signalverarbeitung basierenden Basisbandteil (1), **dadurch gekennzeichnet,**
- **dass** dem Sendesignal ein Hilfssignal (22) mit einem Frequenzoffset fd zu einem Trägersignal (21) des RFID Schreib-/Lesegeräts (19) aufgeprägt ist, zwecks einer gleichspannungsfreien Verarbeitung im Empfänger (30) nach einem RX Konverter (4), und
- **dass** der Eingang des Empfängers (30) ein ein- und ausschaltbares Dämpfungsglied (13) umfasst, welches eingeschaltet den HF-Teil (18) vor einer Übersteuerung oder vor einer Intermodulation im RX Konverter (4) schützt, damit die Gewichte für die Kopie des Sendesignals ermittelt werden können und eine unmittelbare Unterdrückung des Kopplungssignals erreicht wird, wobei anschliessend das Dämpfungsglied (13) ausgeschaltet wird und das RFID Schreib/Lesegerät (19) in einen Nutzbetrieb wechselt, unter Durchführung einer dauernden Nachregelung der Sendesignalunterdrückung.

2. Verfahren nach Anspruch 1, **dadurch gekennzeichnet, dass** der Basisbandteil (1) eine in Amplitude und Phase gewichtete Kopie eines Sendesignals erzeugt, nämlich ein Kompensationssignal, und
- dass nach einer linearen Modulation (14) des Kompensationssignals ein resultierendes Signal an einem Eingang des Empfängers (30) in einer Additionsstufe (8) von einem störenden Kopplungssignal zwischen dem Sender (31) und dem Empfänger (30) subtrahiert wird.

3. Verfahren nach Anspruch 2, **dadurch gekennzeichnet, dass** das Trägersignal (21) mit einem kleinem Hub in der Amplitude moduliert oder mit einem Seitenbandsignal addiert wird, wobei im Sender (31) das Hilfssignal (22) im Abstand fd zum Trägersignal (21) entsteht und wobei dieses Hilfssignal (22) im Empfänger (30) nach dem direkten RX Konverter (4) als ein Wechselsignal der Frequenz fd erscheint und in Amplitude und Phase bezüglich des von dem Basisbandteil (1) ausgesendeten Hilfssignal (22) erfasst wird, mit dem Ziel, die Gewichte zur Sendesignalunterdrückung des Trägersignals (21) zu ermitteln.

4. Verfahren nach einem der Ansprüche 2 oder 3, **dadurch gekennzeichnet, dass** das RF1D Schreib-/Lesegerät (19) das Trägersignal (21) zur Messung der Amplitude und Phase des Hilfssignals (22) kurzzeitig in der Frequenz um fd verschiebt, derart, dass die Ermittlung der Gewichte zwecks Unterdrückung des Trägersignals (21) auf der eigentlichen Sendefrequenz stattfindet und nach der Ermittlung der Gewichte das RFID Schreib/Lesegerät (19) auf seiner ursprünglichen Frequenz arbeitet

5. Verfahren nach einem der vorhergehenden Ansprüche 2 bis 4, **dadurch gekennzeichnet, dass** das modulierende Hilfssignal (22) im Basisbandteil (1) digital realisiert wird und anschliessend mittels eines TX Konverters (5) in den Hochfrequenzbereich (HF-Bereich) verschoben und verstärkt wird, und dass die in Amplitude und Phase gewichtete Kopie des Sendesignals ebenfalls im Basisbandteil (1) digital erzeugt wird und mittels linearem Modulator (14) in den HF-Bereich verschoben wird, derart dass alle Amplituden- und Phasenbeziehungen zwischen Sendesignal und Kompensationssignal durch den Signalprozessor (6) rechnerisch bestimmt sind und dass die gewichtete Kopie des Sendesignals ein- und ausgeschaltet werden kann, um eine unmittelbare Unterdrückung des Kopplungssignals berechnen zu können.

6. Verfahren nach einem der vorhergehenden Ansprüche 2 bis 5, **dadurch gekennzeichnet, dass** das Hilfssignal (22) mit einer Pseudozufalls-Sequenz moduliert wird, derart, dass das Spektrum des Hilfssignals (22) des einen, ersten RFID Schreib-/Lesegeräts (19) für eine elektronische Etikette und ein weiteres, zweites RFID Schreib-/Lesegeräte als schwaches Rauschsignal erscheint und nur für das eine, erste RFID Schreib-/Lesegerät (19), welches die Folge kennt, erfassbar ist.

7. Verfahren nach 6, **dadurch gekennzeichnet, dass** die Korrelationseigenschaften von pseudozufälligen Sequenzen benutzt werden, um auch reflektierte und damit verzögerte Signale, beispielsweise von metallischen Wänden, von einem Kopplungssignal zwischen einer Empfangsantenne (11) und einer Sendeantenne (12) zu trennen und damit messbar zu machen und ebenfalls zu kompensieren, zwecks Erhöhung der Empfindlichkeit des ersten RFID Schreib-/Lesegeräts (19).

8. Verfahren nach einem der vorhergehenden Ansprüche 2 bis 7, **dadurch gekennzeichnet, dass** auch andere Formen des Hilfssignals (22) erzeugt werden können, welche in der Frequenz fd veränderbar sind und als Einseitenbandsignal zum Trägersignal (21) des Lesegerätes addiert werden, um einen Frequenzgang aufzunehmen.

9. Verfahren nach einem der vorhergehenden Ansprüche 2 bis 8, **dadurch gekennzeichnet, dass** bei Anwendung eines Frequency-Hopping-Verfahrens die Gewichte für jede Frequenz in einem Speicher im Signalprozessor (6) gespeichert werden, zwecks Abrufen gespeicherter Anfangswerte zur Kompensation beim wiederholtem Benutzen der gleichen Frequenz.

10. Vorrichtung zur Sendesignalunterdrückung in einem Empfänger eines RFID Schreib-/Lesegeräts (19) zur Durchführung des Verfahrens nach einem der Ansprüche 1 bis 9, wobei das RFID Schreib-/Lesegerät (19) einen HF-Teil (18) mit einem Sender (31) und einem Empfänger (30) umfasst und einen auf digitaler Signalverarbeitung basierenden Basisbandteil (1), **dadurch gekennzeichnet, dass** dem Sendesignal ein Hilfssignal (22) mit einem Frequenzoffset fd zu einem Trägersignal (21) des RFID Schreib-/Lesegeräts (19) aufprägbar ist, zwecks einer gleichspannungsfreien Verarbeitung im Empfänger (30) nach einem RX Konverter (4), und
- dass der Eingang des Empfängers (30) ein ein- und ausschaltbares Dämpfungsglied (13) umfasst, womit im eingeschaltet Zustand dieses Dämpfungsglieds (13) der HF-Teil (18) vor einer Übersteuerung oder vor einer Intermodulation im RX Konverter (4) schützbar ist, damit die Gewichte für die Kopie des Sendesignals ermittelbar sind und eine unmittelbare Unterdrückung des Kopplungssignals erreichbar ist, wobei in einem nachfolgenden, ausgeschalteten Zustand des Dämpfungsglieds (13) das RFID Schreib-/Lesegerät (19) in einem Nutzbetrieb betreibbar ist und eine dauernde Nachregelung der Sendesignalunterdrückung durchführbar ist.

11. Vorrichtung nach Anspruch 10, **dadurch gekennzeichnet, dass** mit dem Basisbandteil (1) eine in Amplitude und Phase gewichtete Kopie eines Sendesignals erzeugbar ist, nämlich ein Kompensationssignal, und
- dass das Kompensationssignal zu einem resultierenden Signal linear modulierbar ist und dieses resultierende Signal an einem Eingang des Empfängers (30) in einer Additionsstufe (8) von einem störenden Kopplungssignal zwischen dem Sender (31) und dem Empfänger (30) subtrahierbar ist.

12. Vorrichtung nach einem der Ansprüche 10 oder 11, **dadurch gekennzeichnet, dass** eine Anzahl Kopplungspfade (28, 29) durch mindestens eine Mehrfach-Implementation (15) zur Erzeugung von gewichteten Kopien des Sendesignals im Basisbandteil (1) kompensierbar ist.

## Claims

1. A method for operating an RFID write/read apparatus (19) with a transmission signal suppression, wherein the RFID write/read apparatus (19) comprises a high-frequency part (HF part) (18) with a transmitter (31) and with a receiver (30), and a baseband part (1) based on digital signal processing, **characterised in**
- **that** an auxiliary signal (22) with a frequency offset fd to a carrier signal (21) of the RFID write/read apparatus (19) is impressed on the transmission signal, for the purpose of a d.c.-voltage-free processing in the receiver (30) behind an RX converter (4), and
- **that** the input of the receiver (30) comprises an attenuator (13), which may be switched on and off, and when switched on protects the HF part (18) from an overmodulation or from an intermodulation in the RX converter (4), so that the weightings for the copy of the transmission signal may be evaluated, and a direct suppression of the coupling signal is achieved, wherein subsequently the attenuator (13) is switched off and the RFID write/read apparatus (19) changes into a useful operation, whilst carrying out a continuous adjustment control of the transmission signal suppression.

2. A method according to claim 1, **characterised in that** the baseband part (1) produces a copy of a transmission signal, specifically a compensation signal, said copy being weighted in amplitude and phase and
- that after a linear modulation (14) of the compensation signal, a resulting signal at an input of the receiver (30) in an addition step (8) is subtracted from an interfering coupling signal between the transmitter (31) and the receiver (30).

3. A method according to claim 2, **characterised in that** the carrier signal (21) is modulated with a small lift in amplitude, or is added to a sideband signal, wherein the auxiliary signal (22) in the transmitter (31) arises at a distance fd to the carrier signal (21), and wherein this auxiliary signal (22) in the receiver (30), behind the RX converter (4) appears as an alternating signal of the frequency fd, and is detected in amplitude and phase with respect to the auxiliary signal (22) emitted by the baseband part (1), with the aim of determining the weightings for transmission signal suppression of the carrier signal (21).

4. A method according to one of the claims 2 or 3, **characterised in that** the RFID write/read apparatus (19) for measuring the amplitude and phase of the auxiliary signal (22) briefly shifts the carrier signal (21) in frequency by fd, in a manner such that the evaluation of the weights for the purpose of suppression of the carrier signal (21) takes place at the actual transmission frequency, and after evaluating the weights, the RFID write/read apparatus (19) operates at its initial frequency.

5. A method according to one of the preceding claims 2 to 4, **characterised in that** the modulated auxiliary signal (22) is realised digitally in the baseband part (1) and subsequently is shifted by way of a TX converter (5) into the high frequency range (HF range) and amplified, and that the copy of the transmission signal, said copy being weighted in amplitude and phase, is likewise produced digitally in the baseband part (1) and is shifted into the HF range by way of a linear modulator (14), in a manner such that all amplitude relations and phase relations between the transmission signal and compensation signal are determined numerically by way of the signal processor (6) and that the weighted copy of the transmission signal may be switched on and off, in order to be able to compute a direct suppression of the coupling signal.

6. A method according to one of the preceding claims 2 to 5, **characterised in that** the auxiliary signal (22) is modulated with a pseudo sequence, in a manner such that the spectrum of the auxiliary signal (22) of the one, first RFID write/read apparatus (19) appears as a weak noise signal for an electronic tag and for a further, second RFID write/read apparatus, and may only be detected for the one, first RFID write/read apparatus (19), which recognises this sequence.

7. A method according to claim 6, **characterised in that** the correlation characteristics of pseudo-ransom sequences are used, in order to also separate reflected and thus delayed signals, for example from metallic walls, from a coupling signal between a receiver antenna (11) and transmitter antenna (12), and thus to render it measurable and likewise compensate it, for the purpose of increasing the sensitivity of the first RFID write/read apparatus (19).

8. A method according to one of the preceding claims 2 to 7, **characterised in that** also other shapes of the auxiliary signal (22) may be produced, which are changeable in frequency fd and are added as a single sideband signal to the carrier signal (21) of the read apparatus, in order to accommodate a frequency response.

9. A method according to one of the preceding claims 2 to 8, **characterised in that** on application of a frequency hopping method, the weights for each frequency are stored in a memory in the signal processor (6), for the purpose of calling up stored initial values for compensation, with a repeated use of the same frequency.

10. A device for transmission signal suppression in a receiver of a RFID write/read apparatus (19) for carrying out the method according to one of the claims 1 to 9, wherein the RFID write/read apparatus (19) comprises an HF part (18) with a transmitter (31) and with a receiver (30), and a baseband part (1) based on digital signal processing, **characterised in that** an auxiliary signal (22) with a frequency offset fd to a carrier signal (21) of the RFID write/read apparatus (19) may be impressed on the transmission signal, for the purpose of a d.c.voltage-free processing in the receiver (30) after an RX converter (4), and
- that the input of the receiver (30) comprises an attenuator (13) which may be switched on and off, with which in the switched-on condition of this attenuator (13), the HF part (18) may be protected from an overmodulation or from an intermodulation in the RX converter (4), so that the weights for the copy of the transmission signal may be determined, and a direct suppression of the coupling signal may be achieved, wherein the RFID write/read apparatus in a subsequent, switched-off condition of the attenuator (13) may be operated in useful operation and a continuous adjustment control of the transmission signal suppression may be carried out.

11. A device according to claim 10, **characterised in that** a copy of a transmission signal, said copy being weighted in amplitude and phase, specifically a compensation signal, may be produced with the baseband part (1), and
- that the compensation signal may be modulated linearly into a resulting signal, and this resulting signal at an input of the receiver (30) may be subtracted in an addition step (8) from an interfering coupling signal between the transmitter (31) and the receiver (30).

12. A device according to one of the claims 10 or 11, **characterised in that** a number of coupling paths (28, 29) may be compensated by at least one multiple implementation (15) for producing weighted copies of the transmission signal in the baseband part (1).

## Revendications

1. Procédé pour faire fonctionner un appareil d'écriture/lecture RFID (19) avec une suppression de signal d'émission, l'appareil d'écriture/lecture RFID (19) comprenant une partie à haute fréquence (partie HF) (18) avec un émetteur (31) et un récepteur (30) et comprenant une partie en bande de base (1) basée sur un traitement numérique du signal, **caractérisé en ce**
- **qu'**un signal auxiliaire (22) ayant un décalage de fréquence fd par rapport à un signal porteur (21) de l'appareil d'écriture/lecture RFID est imprimé au signal d'émission, aux fins d'un traitement sans tension continue dans le récepteur (30) en aval d'un convertisseur RX (4), et
- **que** l'entrée du récepteur (30) comprend un élément d'atténuation (13) activable et désactivable qui, activé, protège la partie HF (18) contre une surcharge ou contre une intermodulation dans le convertisseur RX (4) afin que les poids pour la copie du signal d'émission puissent être déterminés et qu'une suppression directe du signal de couplage soit obtenue, l'élément d'atténuation (13) étant ensuite désactivé et l'appareil d'écriture/lecture RFID (19) passant dans un mode de fonctionnement utile, en réalisant un réajustement permanent de la suppression de signal d'émission.

2. Procédé selon la revendication 1, **caractérisé en ce que** la partie en bande de base (1) génère une copie pondérée en amplitude et en phase d'un signal d'émission, à savoir un signal de compensation, et
- qu'après une modulation linéaire (14) du signal de compensation un signal résultant est soustrait à une entrée du récepteur (30) dans un étage d'addition (8) d'un signal de couplage perturbateur entre l'émetteur (31) et le récepteur (30).

3. Procédé selon la revendication 2, **caractérisé en ce que** le signal porteur (21) est modulé en amplitude avec une petite excursion ou additionné à un signal à bande latérale, le signal auxiliaire (22) étant produit dans l'émetteur (31) à la distance fd par rapport au signal porteur (21) et ce signal auxiliaire (22) apparaissant dans le récepteur (30) en aval du convertisseur RX direct (4) sous la forme d'un signal alternatif de fréquence fd et étant détecté en amplitude et phase par rapport au signal auxiliaire (22) émis par la partie en bande de base (1), dans le but de déterminer les poids pour la suppression de signal d'émission du signal porteur (21).

4. Procédé selon l'une des revendications 2 ou 3, **caractérisé en ce que** l'appareil d'écriture/lecture RFID (19) décale brièvement la fréquence du signal porteur (21) de fd pour mesurer l'amplitude et la phase du signal auxiliaire (22), de façon que la détermination des poids aux fins de suppression du signal porteur (21) ait lieu à la fréquence d'émission proprement dite et qu'après la détermination des poids l'appareil d'écriture/lecture RFID (19) fonctionne à sa fréquence d'origine.

5. Procédé selon l'une des revendications précédentes 2 à 4, **caractérisé en ce que** le signal auxiliaire (22) modulant est réalisé numériquement dans la partie en bande de base (1) et ensuite décalé dans le domaine des hautes fréquences (domaine HF) au moyen d'un convertisseur TX (5) et amplifié, et que la copie pondérée en amplitude et en phase du signal d'émission est également générée numériquement dans la partie en bande de base (1) et décalée le domaine HF au moyen d'un modulateur linéaire (14), de façon que toutes les relations d'amplitude et de phase entre signal d'émission et signal de compensation soient déterminées par calcul par le processeur de signaux (6) et que la copie pondérée du signal d'émission puisse être activée et désactivée afin de pouvoir calculer une suppression directe du signal de couplage.

6. Procédé selon l'une des revendications 2 à 5, **caractérisé en ce que** le signal auxiliaire (22) est modulé avec une séquence pseudo-aléatoire de façon que le spectre du signal auxiliaire (22) d'un premier appareil d'écriture/lecture RFID (19) apparaisse pour une étiquette électronique et un autre, deuxième appareil d'écriture/lecture RFID comme un faible signal de bruit et puisse être détecté seulement par le premier appareil d'écriture/lecture RFID (19) qui connaît la séquence.

7. Procédé selon 6, **caractérisé en ce que** les propriétés de corrélation de séquences pseudo-aléatoires sont utilisées pour séparer aussi des signaux réfléchis et donc retardés, par exemple par des murs métalliques, d'un signal de couplage entre une antenne de réception (11) et une antenne d'émission (12) et ainsi pouvoir les mesurer et également les compenser, dans le but d'augmenter la sensibilité du premier appareil d' écriture/lecture RFID (19).

8. Procédé selon l'une des revendications 2 à 7, **caractérisé en ce que** d'autres formes du signal auxiliaire (22) peuvent aussi être générées, dont la fréquence fd est variable et qui sont additionnées sous forme de signal à bande latérale unique au signal porteur (21) de l'appareil de lecture afin de détecter une réponse en fréquence.

9. Procédé selon l'une des revendications 2 à 8, **caractérisé en ce qu'**en cas d'utilisation d'un procédé à saut de fréquence (ou frequency hopping), les poids pour chaque fréquence sont stockés dans une mémoire dans le processeur de signaux (6), dans le but d'appeler des valeurs de départ stockées pour la compensation lors de l'utilisation répétée de la même fréquence.

10. Dispositif pour la suppression de signal d'émission dans un récepteur d'un appareil d'écriture/lecture RFID (19) pour réaliser le procédé selon l'une des revendications 1 à 9, l'appareil d'écriture/lecture RFID (19) comprenant une partie en bande de base (1) basée sur un traitement numérique du signal, **caractérisé en ce qu'**un signal auxiliaire (22) ayant un décalage de fréquence fd par rapport à un signal porteur (21) de l'appareil d'écriture/lecture RFID (19) peut être imprimé au signal d'émission, aux fins d'un traitement sans tension continue dans le récepteur (30) en aval d'un convertisseur RX (4), et
- que l'entrée du récepteur (30) comprend un élément d'atténuation (13) activable et désactivable, lequel élément d'atténuation (13) protège, à l'état activé, la partie HF (18) contre une surcharge ou contre une intermodulation dans le convertisseur RX (4) afin que les poids pour la copie du signal d'émission puissent être déterminés et qu'une suppression directe du signal de couplage puisse être obtenue, sachant que dans un état suivant, désactivé, de l'élément d'atténuation (13), l'appareil d'écriture/lecture RFID (19) peut être mis dans un mode de fonctionnement utile et qu'un réajustement permanent de la suppression de signal d'émission est réalisable.

11. Dispositif selon la revendication 10, **caractérisé en ce qu'**une copie pondérée en amplitude et en phase d'un signal d'émission, à savoir un signal de compensation, peut être généré avec la partie en bande de base (1), et
- que le signal de compensation peut être modulé en un signal résultant et ce signal résultant peut être soustrait à une entrée du récepteur (30) dans un étage d'addition (8) d'un signal de couplage perturbateur entre l'émetteur (31) et le récepteur (30).

12. Dispositif selon l'une des revendications 10 ou 11, **caractérisé en ce qu'**un certain nombre de chemins de couplage (28, 29) peut être compensé par au moins une implémentation multiple (15) pour générer des copies pondérées du signal d'émission dans la partie en bande de base (1).
